# EUROPEAN PATENT APPLICATION

(11) **EP 3 972 011 A1**
(43) Date of publication of application: **23.03.2022**
(21) Application number: 21195055.5
(22) Date of filing: 06.09.2021
(51) Int. Cl.: H01M 4/04, H01M 50/209, H01M 50/211, H01M 50/244, H01M 50/298, H01M 50/528, H01M 50/533, H01M 50/536, H01M 50/538, H01M 50/548, H01M 10/0587, H01M 50/204, H01M 10/04

(54) **SECONDARY BATTERY**

(30) Priority: 18.09.2020 JP 2020156930
(71) Applicant: Prime Planet Energy & Solutions, Inc., Chuo-ku Tokyo 103-0022 (JP)
(72) Inventor: FUJISHIMA, Seigo, Tokyo, 103-0022 (JP)
(74) Representative: Kuhnen & Wacker Patent- und Rechtsanwaltsbüro PartG mbB

(57) **Abstract**

A secondary battery includes a battery case and a plurality of electrode assemblies housed in the battery case. The plurality of electrode assemblies are aligned in the battery case in a predetermined orderly arrangement. Positive electrode sheets of adjacent two of the electrode assemblies are electrically connected to each other by joining one of first and second positive electrode tabs of the adjacent two of the electrode assemblies to another one, and negative electrode sheets of the adjacent two of the electrode assemblies are electrically connected to each other by joining one of first and second negative electrode tabs of the adjacent two of the electrode assemblies to another one.

## Description

### BACKGROUND

The present invention relates to secondary batteries.

CN 110518174 A discloses a structure in which a plurality of electrode assemblies connected in series are enclosed in a battery case.

JP 2019-204799 A discloses a secondary battery in which two flat wound electrode assembles are housed in a square exterior package. In the secondary battery disclosed in the publication, each of the winding axes of the wound electrode assemblies is arranged in a direction perpendicular to a sealing plate. The positive electrode tab portion and the negative electrode tab portion of each of the wound electrode assemblies are positioned on the sealing plate side. The positive electrode tab portions of the two wound electrode assemblies are connected to a positive electrode current collector inside the exterior package. The negative electrode tab portions of the two wound electrode assemblies are connected to a negative electrode current collector inside the exterior package. The positive electrode tab portions and the positive electrode current collectors of the two wound electrode assemblies are welded by resistance welding. The negative electrode tab portions and the negative electrode current collectors of the two wound electrode assemblies are welded by resistance welding.

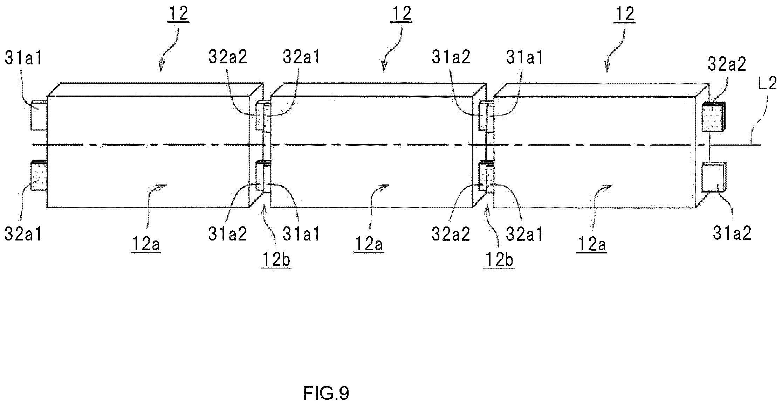

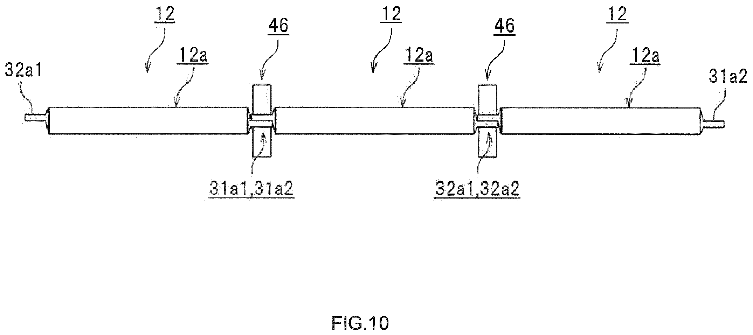

More specifically, as disclosed in Figs. 9 and 10 of the publication, the positive electrode current collector is disposed between the positive electrode tab portions of the two wound electrode assemblies. The positive electrode current collector includes a base portion disposed on the exterior package side and two connecting portions extending from the base portion along the positive electrode tab portions of the two wound electrode assemblies. The positive electrode tab portion is overlapped and joined to outer sides of the two connecting portions that face each other. The negative electrode current collector tab and the negative electrode tab portions of the two wound electrode assemblies are also joined to each other in a like manner. The joining is achieved by resistance welding. It is also disclosed that ultrasonic welding or high energy beam welding, such as laser welding, may be used in place of resistance welding.

### SUMMARY

The present inventors have conducted a research on a technique of enclosing a plurality of electrode assemblies within a battery case and a technique of increasing the capacity of a secondary battery by connecting a plurality of electrode assemblies enclosed in a battery case to each other in parallel. According to JP 2019-204799 A, the two wound electrode assemblies are connected in parallel to each other by the positive electrode current collector and the negative electrode current collector attached to the battery case. However, when a further larger number of electrode assemblies needs to be housed in a battery case, the structure disclosed in JP 2019-204799 A cannot be employed without any modification.

A secondary battery disclosed in the present disclosure includes a battery case and a plurality of electrode assemblies housed in the battery case. Each of the electrode assemblies includes a stacked structure in which a positive electrode sheet and a negative electrode sheet are stacked with a separator interposed therebetween. The positive electrode sheet includes a first positive electrode tab protruding from a stacked region in which the positive electrode sheet and the negative electrode sheet are stacked with the separator, and a second positive electrode tab protruding from the stacked region a position different from where the first positive electrode tab protrudes. The negative electrode sheet includes a first negative electrode tab protruding from the stacked region at a position different from where first positive electrode tab and the second positive electrode tab protrude, and a second negative electrode tab protruding from a position different from where the first positive electrode tab, the second positive electrode tab, and the first negative electrode tab protrude. The plurality of electrode assemblies are arranged in the battery case in a predetermined orderly arrangement. Positive electrode sheets of adjacent two of the electrode assemblies are electrically connected to each other by joining one of the first and second positive electrode tabs of the adjacent two of the electrode assemblies to another one. In addition, negative electrode sheets of the adjacent two of the electrode assemblies are electrically connected to each other by joining one of the first and second negative electrode tabs of the adjacent two of the electrode assemblies to another one.

In such a secondary battery as described above, a plurality of electrode assemblies are housed in the battery case. This serves to obtain a higher capacity. Moreover, adjacent ones of the plurality of electrode assemblies housed in the battery case are connected in parallel to each other by electrically connecting one of the positive electrode tabs to another one and also electrically connecting one of the negative electrode tabs to another one As a result, it is easy to obtain the voltage of the plurality of electrode assemblies housed in the battery case.

The positive electrode sheet and the negative electrode sheet may include a rectangular region in which the positive electrode sheet and the negative electrode sheet are stacked with the separator interposed therebetween. The first positive electrode tab may be disposed at one side edge of the rectangular region. The first negative electrode tab may be disposed at a position of the one side edge of the rectangular region that does not interfere with the first positive electrode tab. The second positive electrode tab may be disposed at the opposite side edge of the rectangular region. The second negative electrode tab may be disposed at a position of the opposite side edge of the rectangular region that does not interfere with the second positive electrode tab.

The first positive electrode tab may be disposed closer to a first end along the one side edge of the rectangular region. The second positive electrode tab may be disposed closer to a second end that is opposite the first end at which the first positive electrode tab is disposed, along the opposite side edge of the rectangular region. The first negative electrode tab may be disposed closer to the second end along the one side edge of the rectangular region. The second negative electrode tab may be disposed closer to the first end along the opposite side edge of the rectangular region. The plurality of electrode assemblies may be arranged in alternate orientations.

The first positive electrode tab may be disposed closer to a first end along the one side edge of the rectangular region. The second positive electrode tab may be disposed closer to the first end along the opposite side edge of the rectangular region. The first negative electrode tab may be disposed closer to a second end that is opposite the first end at which the first positive electrode tab is disposed, along the one side edge of the rectangular region. The second negative electrode tab may be disposed closer to the second end along the opposite side edge of the rectangular region.

Each of the plurality of electrode assemblies may include positive electrode sheets and negative electrode sheets each being formed in a predetermined shape, the positive electrode sheets and negative electrode sheets being alternately stacked with separators each interposed between one of the positive electrode sheets and one of the negative electrode sheets. Each of the plurality of electrode assemblies may be a wound electrode assembly in which a strip-shaped positive electrode sheet and a strip-shaped negative electrode sheet are stacked with their longitudinal axes being aligned in a uniform orientation and are wound around a winding axis extending along a lateral axis.

The plurality of electrode assemblies may be arranged in a row along a longitudinal axis of the battery case with respective stacking axes of the positive electrode sheet and the negative electrode sheet being aligned in a uniform orientation, and may be electrically connected in parallel to each other in the battery case. An embodiment of the secondary battery may further include a positive electrode terminal attached to one of the plurality of electrode assemblies that is located at one end of the plurality of electrode assemblies arranged in a row, and a negative electrode terminal attached to another one of the plurality of electrode assemblies that is located at the other end.

The battery case may include a substantially rectangular bottom surface portion, a pair of wider surface portions extending upwardly from respective longer sides of the bottom surface portion, a pair of narrower surface portions extending upwardly from respective shorter sides of the bottom surface portion, and a top surface portion disposed opposite the bottom surface portion. Each of the shorter sides may have a length corresponding a thickness of the electrode assembly along a stacking axis of the positive electrode sheet and the negative electrode sheet. Each of the longer sides may have a length corresponding to a total length of the plurality of electrode assemblies that are arranged in a row with the stacking axes being parallel to each other.

The battery case may be a prismatic case in which at least two plate members are combined and the combined plate members are joined to each other.

The adjacent two of the plurality of electrode assemblies may be electrically connected in parallel to each other, and the adjacent two of the plurality of electrode assemblies may further include a joining part joining the adjacent two of electrode assemblies and being bent so that the stacked regions of the two adjacent electrode assemblies are stacked on each other in the battery case. The battery case may be a prismatic case in which at least two plate members are joined to each other. The battery case may be a laminate film case covering the plurality of electrode assemblies.

### BRIEF DESCRIPTION OF THE DRAWINGS

Fig. 1 is a perspective view schematically illustrating a secondary battery 10.
Fig. 2 is a plan view of an electrode assembly 12.
Fig. 3 is a plan view illustrating a portion of the electrode assembly 12 in which a negative electrode sheet 32 is stacked.
Fig. 4 is a plan view illustrating a portion of the electrode assembly 12 in which a positive electrode sheet 31 is stacked.
Fig. 5 is a schematic view illustrating the electrode assembly 12 that is disassembled into positive electrode sheets 31, negative electrode sheets 32, and separators 33.
Fig. 6 is a schematic view illustrating a manufacturing process of the positive electrode sheet 31.
Fig. 7 is a schematic view illustrating a wound electrode assembly 12A that is shown disassembled.
Fig. 8 is a schematic developed view illustrating the wound electrode assembly 12A that is developed.
Fig. 9 is a perspective view schematically illustrating three electrode assemblies 12 that are joined to each other.
Fig. 10 is a schematic view illustrating a joining process of joining the three electrode assemblies 12.
Fig. 11 is a perspective view illustrating a process in which a plurality of electrode assemblies 12 are housed in a battery case 11.
Fig. 12 is a perspective view illustrating a secondary battery 10A according to another embodiment of the disclosure.
Fig. 13 is a plan view illustrating a plurality of electrode assemblies 12 housed in the secondary battery 10A shown in Fig. 12.
Fig. 14 is a perspective view illustrating a secondary battery 10B according to yet another embodiment of the disclosure.
Fig. 15 is a perspective view illustrating electrode assemblies 12 housed in the secondary battery 10B shown in Fig. 14.
Fig. 16 is a plan view illustrating an electrode assembly 12B according to another embodiment of the disclosure.
Fig. 17 is a perspective view illustrating a plurality of electrode assemblies 12B that are connected to each other.
Fig. 18 is a perspective view illustrating a secondary battery 10C in which the plurality of electrode assemblies 12B are housed in a battery case 11C.
Fig. 19 is a perspective view illustrating another embodiment of the plurality of electrode assemblies 12B.

### DETAILED DESCRIPTION

Hereinbelow, embodiments of a secondary battery according to the present disclosure are described. Throughout the drawings, identical reference characters and descriptions are used to designate like elements or features as appropriate. It should be noted that dimensional relationships in the drawings do not necessarily reflect actual dimensional relationships.

In the present description, the term "battery" is intended to mean any electricity storage device in general that is capable of providing electric energy therefrom, which is intended to include primary batteries and secondary batteries. The term "secondary battery" refers to a repeatedly rechargeable electrical storage device in general. The term "secondary battery" is meant to include what is called a storage battery such as a lithium secondary battery, a nickel-metal hydride battery, and a nickel-cadmium storage battery. Herein, a lithium-ion secondary battery, one type of secondary battery, is used to describe an example of the secondary battery according to the present disclosure in detail. However, the secondary battery according to the present disclosure is not limited to the embodiments described herein unless specifically stated otherwise.

### Secondary Battery 10

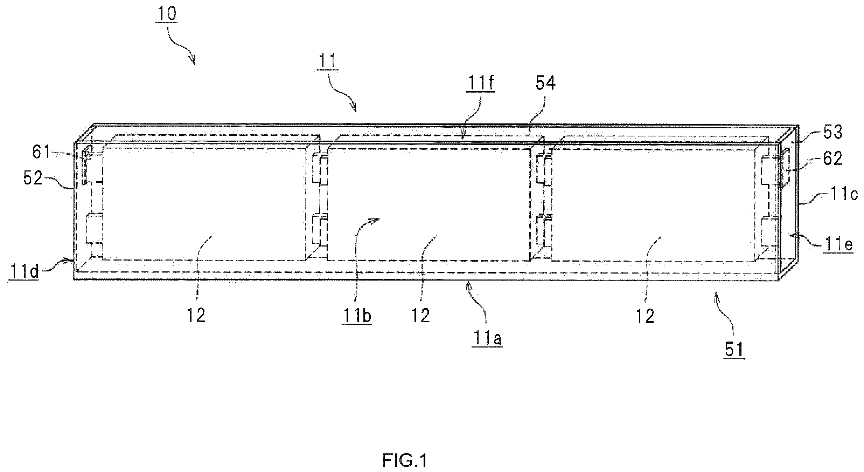

Fig. 1 is a perspective view schematically illustrating a secondary battery 10. As illustrated in Fig. 1, the secondary battery 10 includes a battery case 11 and a plurality of electrode assemblies 12 housed in the battery case 11.

### Battery Case 11

The battery case 11 is a housing that houses the plurality of electrode assemblies 12, as illustrated in Fig. 1. In this embodiment, the battery case 11 is what is called a prismatic case, which is in a substantially rectangular parallelepiped shape. The battery case 11 includes a bottom surface portion 11a, wider surface portions 11b, 11c, narrower surface portions 11d, 11e, and a top surface portion 11f.

The bottom surface portion 11a is in a substantially rectangular shape. In this embodiment, in the battery case 11, the plurality of electrode assemblies 12 are arranged in a row in a uniform orientation, as illustrated in Fig. 1. Inside the battery case 11, the shorter sides of the bottom surface portion 11a have a length corresponding to the thickness of each one of the electrode assemblies 12. The longer sides of the bottom surface portion 11a have a length corresponding to the total length of the plurality of electrode assemblies 12 arranged in a row.

The wider surface portion 11b extends upward from one longer side of the bottom surface portion 11a. The wider surface portion 11c extends upward from the other side of the bottom surface portion 11a. The narrower surface portion 11d extends upward from one shorter side of the bottom surface portion 11a. The narrower surface portion 11c extends upward from the other shorter side of the bottom surface portion 11a. The top surface portion 11f is disposed opposite the bottom surface portion 11a. The top surface portion 11f closes the opening formed by the upper sides of the pair of wider surface portions 11b and 11c and the pair of the narrower surface portions 11d and 11e. The details of the battery case 11 will be further described later.

### Electrode Assembly 12

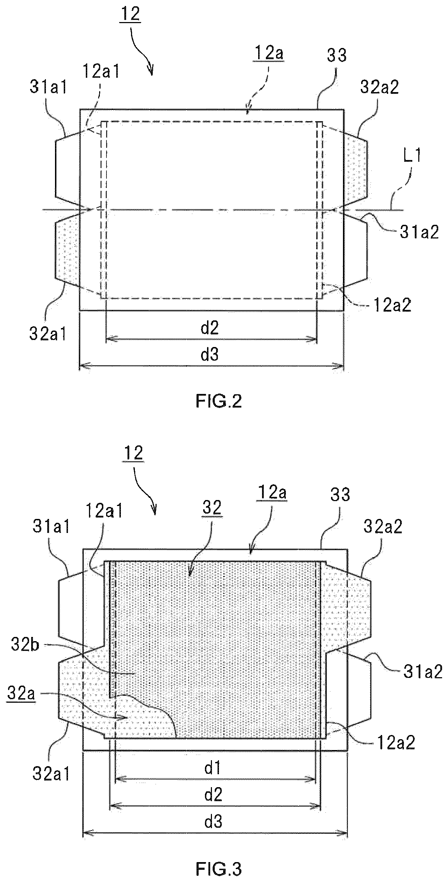

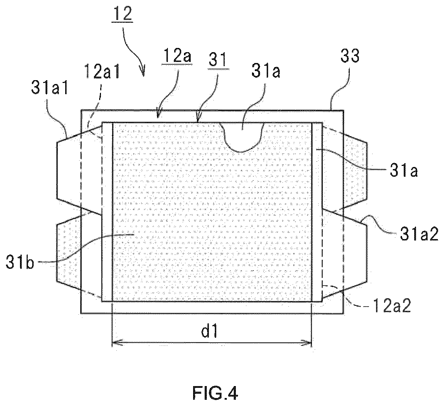

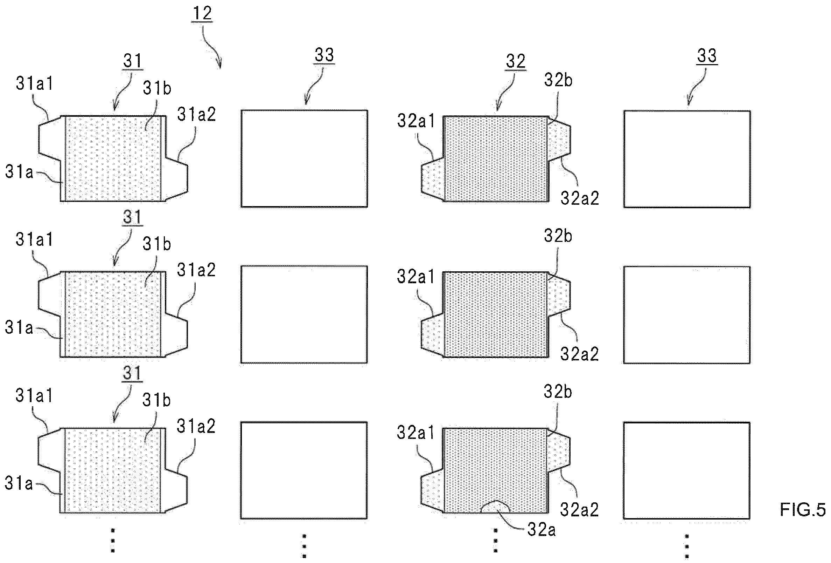

Fig. 2 is a plan view of an electrode assembly 12. Fig. 3 is a plan view illustrating a portion of the electrode assembly 12 shown in Fig. 2 in which a negative electrode sheet 32 is stacked. Fig. 4 is a plan view illustrating a portion of the electrode assembly 12 shown in Fig. 2 in which a positive electrode sheet 31 is stacked. Fig. 5 is a schematic view illustrating the electrode assembly 12 that is disassembled into positive electrode sheets 31, negative electrode sheets 32, and separators 33. As illustrated in Figs. 2 to 5, the electrode assembly 12 includes a stack structure in which a positive electrode sheet 31 and a negative electrode sheet 32 are stacked with a separator 33 interposed therebetween. Herein, what is called a stacked electrode assembly, in which positive electrode sheets 31 and negative electrode sheets 32 each formed into a predetermined shape are alternately stacked with separators 33 interposed therebetween, is illustrated as an example of the electrode assembly 12.

### Positive Electrode Sheet 31

As illustrated in Figs. 4 and 5, each of the positive electrode sheets 31 includes a positive electrode current collector foil 31a and a positive electrode active material layer 31b formed on the positive electrode current collector foil 31a. Fig. 4 schematically illustrates a state in which the positive electrode active material layer 31b is partially peeled so that the positive electrode current collector foil 31a that is hidden under the positive electrode active material layer 31b is partially exposed. The positive electrode current collector foil 31a may be composed of, for example, an aluminum foil. The positive electrode active material layer 31b is a layer containing a positive electrode active material. In a lithium-ion secondary battery, the positive electrode active material is a material that releases lithium ions during charge and absorbs lithium ions during discharge, such as lithium-transition metal composite material. Generally, other than the lithium-transition metal composite material, various materials have been proposed for use as the positive electrode active material, and the positive electrode active material is not limited to a particular material. The positive electrode active material layer 31b is formed on both sides of the positive electrode current collector foil 31a.

In this embodiment, a region 12a in which a positive electrode sheet 31 and a negative electrode sheet 32 are stacked with a separator 33 is in a substantially rectangular shape. In the region in which the positive electrode sheet 31 and the negative electrode sheet 32 are stacked with the separator 33 interposed therebetween (i.e., the stacked region 12a), the positive electrode active material layer 31b is formed on both sides of the positive electrode sheet 31. The positive electrode sheet 31 further includes a first positive electrode tab 31a1 and a second positive electrode tab 31a2. The first positive electrode tab 31a1 and the second positive electrode tab 31a2 are portions of the positive electrode current collector foil 31a that protrude from the rectangular region in which the positive electrode sheet 31 and the negative electrode sheet 32 are stacked with the separator 33 interposed therebetween (i.e., the stacked region 12a). In this embodiment, the first positive electrode tab 31a1 and the second positive electrode tab 31a2 are disposed at diagonally opposite corners of the rectangular region in which the positive electrode sheet 31 and the negative electrode sheet 32 are stacked with the separator 33 interposed therebetween.

### Negative Electrode Sheet 32

As illustrated in Fig. 3, the negative electrode sheet 32 includes a negative electrode current collector foil 32a and a negative electrode active material layer 32b formed on the negative electrode current collector foil 32a. Fig. 3 schematically illustrates a state in which the negative electrode active material layer 32b is partially peeled so that the negative electrode current collector foil 32a that is hidden under the negative electrode active material layer 32b is partially exposed. The negative electrode current collector foil 32a may be composed of, for example, a copper foil. The negative electrode active material layer 32b is a layer containing a negative electrode active material. In a lithium-ion secondary battery, for example, the negative electrode active material is a material that absorbs lithium ions during charge and releases the absorbed lithium ions during discharge, such as graphite. Generally, other than graphite, various materials have been proposed for use as the negative electrode active material, and the negative electrode active material is not limited to a particular material. The negative electrode active material layer 32b is formed on both sides of the negative electrode current collector foil 32a.

In this embodiment, in the region in which the positive electrode sheet 31 and the negative electrode sheet 32 are stacked with the separator 33 interposed therebetween (i.e., the stacked region 12a), the negative electrode active material layer 32b is formed on both sides of the negative electrode sheet 32. The negative electrode active material layer 32b is formed with a width that is slightly wider than the positive electrode active material layer 31b so that the negative electrode active material layer 32b can cover the positive electrode active material layer 31b of the positive electrode sheet 31. The negative electrode sheet 32 further includes a first negative electrode tab 32a1 and a second negative electrode tab 32a2. The first negative electrode tab 32a1 and the second negative electrode tab 32a2 are portions of the negative electrode current collector foil 32a that protrude from the rectangular region in which the positive electrode sheet 31 and the negative electrode sheet 32 are stacked with the separator 33 interposed therebetween (i.e., the stacked region 12a). In this embodiment, the first negative electrode tab 32a1 and the second negative electrode tab 32a2 are disposed at diagonally opposite corners of the rectangular region in which the positive electrode sheet 31 and the negative electrode sheet 32 are stacked with the separator 33 interposed therebetween.

### Separator 33

The separator 33 may be formed of, for example, an electrolyte-permeable porous resin sheet provided with required heat resistance. The separator 33 is formed in a rectangular shape that is slightly larger than the negative electrode active material layer 32b so that the separator 33 can cover the negative electrode active material layer 32b of the negative electrode sheet 32. Various embodiments of the separator 33 have been proposed, and the separator 33 is not limited to a particular type of separator. The negative electrode active material layer 32b of the negative electrode sheet 32 may cover the positive electrode active material layer 31b of the positive electrode sheet 31 with the separator 33 interposed therebetween. The separator 33 may further cover the positive electrode active material layer 31b of the positive electrode sheet 31 and the negative electrode active material layer 32b of the negative electrode sheet 32.

As illustrated in Fig. 5, positive electrode sheets 31, negative electrode sheets 32, and separators 33 that are shaped in predetermined shapes are prepared in manufacturing the electrode assembly 12. As illustrated in Figs. 2 to 4, they are stacked in the following order: separator 33, negative electrode sheet 32, separator 33, positive electrode sheet 31, separator 33, negative electrode sheet 32, ... , separator 33, positive electrode sheet 31, separator 33, negative electrode sheet 32, and separator 33. A separator 33 is stacked to be the outermost layer at both ends of the stacking axis, a negative electrode sheet 32 is then stacked on the inside, and further inside, positive electrode sheets 31 and negative electrode sheets 32 are stacked with separators 33 interposed therebetween.

As illustrated in Fig. 2, the first positive electrode tab 31a1 and the second positive electrode tab 31a2 protrude at diagonally opposite corners of the rectangular region in which the positive electrode sheet 31 and the negative electrode sheet 32 are stacked with the separator 33 interposed therebetween (i.e., the stacked region 12a) from the rectangular region (i.e., the stacked region 12a). The first negative electrode tab 32a1 and the second negative electrode tab 32a2 protrude from the rectangular region (i.e., the stacked region 12a) at different opposite corners from where the first positive electrode tab 31al and the second positive electrode tab 31a2 protrude. Thus, the second positive electrode tab 31a2 protrudes from the stacked region 12a at a position different from where the first positive electrode tab 31a1 protrudes. The second negative electrode tab 32a2 protrudes from the stacked region 12a at a position different from where the first negative electrode tab 32a1 protrudes.

### Manufacturing Process of Stacked Electrode Assembly

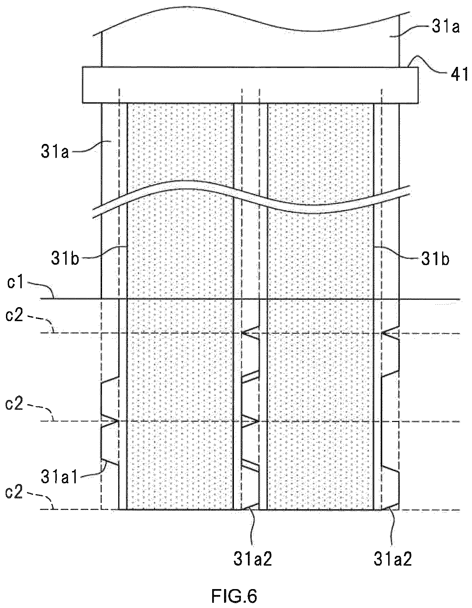

Fig. 6 is a schematic view illustrating a manufacturing process of the positive electrode sheet 31. As illustrated in Fig. 6, a strip-shaped positive electrode current collector foil 31a on which positive electrode active material layers 31b are formed on both sides is prepared for the positive electrode sheet 31. The positive electrode active material layer 31b is formed on both sides of the positive electrode current collector foil 31a in a predetermined width region of the strip-shaped positive electrode current collector foil 31a. The positive electrode sheet 31 may be produced by, for example, a roll-to-roll process. First, the positive electrode active material layer 31b is formed on the strip-shaped positive electrode current collector foil 31a while transferring the strip-shaped positive electrode current collector foil 31a. After the positive electrode active material layer 31b has been formed on both sides of the positive electrode current collector foil 31a, predetermined shapes are cut out, including first positive electrode tabs 31a1 and second positive electrode tabs 31a2. In Fig. 6, the transferred positive electrode current collector foil 31a is cut in the middle. Fig. 6 shows a step of forming the positive electrode active material layer 31b, which is performed at an early stage of the process of manufacturing the positive electrode sheet 31, and a step of cutting the positive electrode sheet 31, which is performed at a later stage.

The strip-shaped positive electrode current collector foil 31a and a positive electrode mixture containing a positive electrode active material are prepared in the step of forming the positive electrode active material layer 31b. The strip-shaped positive electrode current collector foil 31a is provided with a region in which the positive electrode active material layer 31b is to be formed, at its laterally central portion. In the region in which the positive electrode active material layer 31b is to be formed, a positive electrode mixture is coated at a predetermined weight per unit area on the positive electrode current collector foil 31a using a die-coater 41, as illustrated in Fig. 6. Here, in order to form the positive electrode tabs, uncoated regions in which the positive electrode active material layer 31b is not formed are provided on both sides of the region in which the positive electrode active material layer 31b is to be formed on the strip-shaped positive electrode current collector foil 31a. Herein, two rows of the region in which the positive electrode active material layer 31b is to be formed are provided along the longitudinal axis of the strip-shaped positive electrode current collector foil 31a at different lateral positions. In the two rows of the region, the positive electrode active material layer 31b is formed on both sides of the positive electrode current collector foil 31a. The positive electrode active material layer 31b may be formed on one side of the positive electrode current collector foil 31a at a time.

Thereafter, as illustrated in Fig.6, first positive electrode tabs 31a1 and second positive electrode tabs 31a2 are formed in the uncoated region in which the positive electrode active material layer 31b is not formed. For example, laser is applied to the positive electrode current collector foil 31a at a laser irradiation position c1 that is set along the lateral axis of the transferred positive electrode current collector foil 31a, so that the first positive electrode tabs 31a1 and the second positive electrode tabs 31a2 are formed in a predetermined shape. In this embodiment, the first positive electrode tabs 31a1 and the second positive electrode tabs 31a2 are cut out in a zig-zag arrangement on both sides of the positive electrode active material layer 31b. Furthermore, the positive electrode current collector foil 31a is cut along a cutting line c2 along the lateral axis, whereby a positive electrode sheet 31 is cut out in which a first positive electrode tab 31a1 and a second positive electrode tab 31a2 are disposed at diagonally opposite corners.

Although not shown in the drawings, negative electrode sheets 32 are also manufactured in a similar method to the method of manufacturing the positive electrode sheets 31. Specifically, after the negative electrode active material layer 32b has been formed on a strip-shaped negative electrode current collector foil 32a, negative electrode sheets 32 are cut out into predetermined shapes, including first negative electrode tabs 32a1 and second negative electrode tabs 32a2. In addition, rectangular-shaped separators 33 each having a shape corresponding to the positive electrode sheet 31 and the negative electrode sheet 32 are prepared, as illustrated in Fig. 5. Then, as illustrated in Figs. 2 to 4, positive electrode sheets 31 and negative electrode sheets 32 may be alternately stacked one on top of the other with separators 33 interposed therebetween.

As shown in Figs. 2 to 4, the width d2 of the negative electrode active material layer 32b is wider than the width d1 of the positive electrode active material layer 31b. The width d3 of the separator 33 is wider than the width d2 of the negative electrode active material layer 32b. The first positive electrode tab 31a1 and the second positive electrode tab 31a2 as well as the first negative electrode tab 32a1 and the second negative electrode tab 32a2 have a required length so that they can protrude from the separator 33. The positive electrode sheet 31, the negative electrode sheet 32, and the separator 33 are stacked as illustrated in Figs. 2 to 4 so that the negative electrode active material layer 32b covers the positive electrode active material layer 31b with the separator 33 interposed therebetween and also the first positive electrode tab 31a1, the second positive electrode tab 31a2, the first negative electrode tab 32a1, and the second negative electrode tab 32a2 protrude from the separator 33.

Herein, the stacked electrode assembly 12, in which positive electrode sheets 31 and negative electrode sheets 32 are alternately stacked in a predetermined order with separators 33 interposed therebetween, has been illustrated as an example. The electrode assembly 12 is not limited to being a stacked electrode assembly, but may be what is called a wound electrode assembly.

### Wound Electrode Assembly

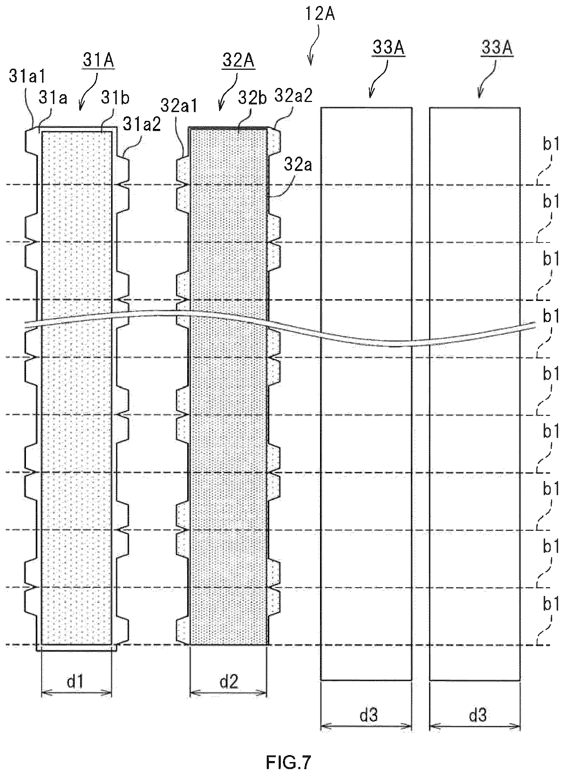

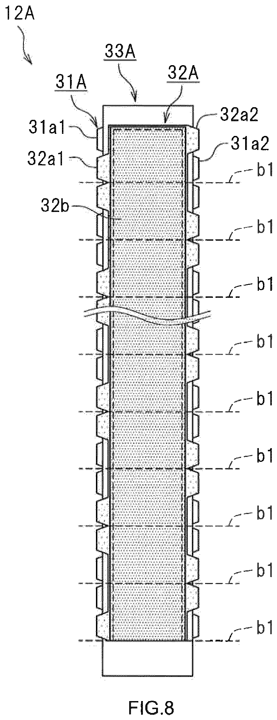

Fig. 7 is a schematic view illustrating a wound electrode assembly 12A that is shown disassembled. Fig. 8 is a schematic developed view illustrating the wound electrode assembly 12A that is developed. As illustrated in Fig. 7, the wound electrode assembly 12A includes a strip-shaped positive electrode sheet 31A, a negative electrode sheet 32A, and two strip-shaped separators 33A. As illustrated in Fig. 7, the strip-shaped positive electrode sheet 31A is provided with a region in which a positive electrode active material layer 31b is to be formed at its laterally central portion of a strip-shaped positive electrode current collector foil 31a. In order to form the first positive electrode tab 31a1 and the second positive electrode tab 31a2, uncoated portions in which the positive electrode active material layer 31b is not formed are provided on both sides of the region in which the positive electrode active material layer 31b is to be formed.

The width d2 of the negative electrode active material layer 32b is wider than the width d1 of the positive electrode active material layer 31b. The width d3 of the separators 33A is wider than the width d2 of the negative electrode active material layer 32b. The first positive electrode tab 31al and the second positive electrode tab 31a2 as well as the first negative electrode tab 32a1 and the second negative electrode tab 32a2 have a required length so that they can protrude from the separators 33A. As illustrated in Fig. 8, in the wound electrode assembly 12A, the strip-shaped positive electrode sheet 31A, the strip-shaped negative electrode sheet 32A, and the strip-shaped separators 33A are stacked in such a manner that their longitudinal axes are aligned in a uniform orientation, the negative electrode active material layer 32b covers the positive electrode active material layer 31b with the strip-shaped separators 33A interposed therebetween, and also the first positive electrode tab 31a1, the second positive electrode tab 31a2, the first negative electrode tab 32a1, and the second negative electrode tab 32a2 protrude from the separators 33A.

In this state, the positive electrode sheet 31, the negative electrode sheet 32, and the separators 33A are stacked in the following order, positive electrode sheet 31, separator 33A, negative electrode sheet 32, and separator 33A so that the negative electrode sheet 32 is disposed outward of the positive electrode sheet 31 and a separator 33A is disposed further outward of the negative electrode sheet 32 at the outermost circumference. Then, the positive electrode sheet 31, the negative electrode sheet 32, and the separators 33A are wound in such a manner that the positive electrode sheet 31 is disposed inward of the negative electrode sheet 32. Note that the wound electrode assembly 12A is shaped in a substantially rectangular flat shape in which the positive electrode sheet 31 and the negative electrode sheet 32 are wound. When the wound electrode assembly 12A is shaped in a flat shape, the first positive electrode tab 31a1, the second positive electrode tab 31a2, the first negative electrode tab 32a1, and the second negative electrode tab 32a2 are located at substantially the same positions. As thus described, each of the plurality of electrode assemblies 12 may be a wound electrode assembly in which the strip-shaped positive electrode sheet 31A and the strip-shaped negative electrode sheet 32A are stacked with their longitudinal axes being aligned in a uniform orientation and are wound around the winding axis extending along the lateral axis.

It should be noted that, in the case of the wound electrode assembly 12A, the first positive electrode tab 31a1, the second positive electrode tab 31a2, the first negative electrode tab 32a1, and the second negative electrode tab 32a2 may be provided at predetermined positions in the strip-shaped positive electrode sheet 31A and the strip-shaped negative electrode sheet 32A so that the first positive electrode tab 31a1, the second positive electrode tab 31a2, the first negative electrode tab 32a1, and the second negative electrode tab 32a2 can be stacked at substantially the same position when the wound electrode assembly 12A is shaped into a flat shape. That is, the strip-shaped positive electrode sheet 31A and the strip-shaped negative electrode sheet 32A that are shown in Figs. 7 and 8 are not precisely depicted.

To be precise, for example, the pitch between bend lines b1 is narrower toward the inside and wider toward the outside along the circumferential direction. The pitch between the bend lines b1 can be obtained in advance by calculation. The positions and shapes of the first positive electrode tabs 31a1 and the second positive electrode tabs 31a2 that are formed in the strip-shaped positive electrode sheet 31A may be adjusted in advance according to the pitch between the bend lines b1. The positions and shapes of the first negative electrode tabs 32a1 and the second negative electrode tab 32a2 that are formed in the strip-shaped negative electrode sheet 32A may also be adjusted in advance according to the pitch between the bend lines b1. In Figs. 7 and 8, the bend lines b1 for winding the electrode sheets and the separators are shown in a schematic manner. The first positive electrode tabs 31a1, the second positive electrode tabs 31a2, the first negative electrode tabs 32a1, and the second negative electrode tabs 32a2 may be stacked on each other after they have been wounded.

### Application to All-Solid-State Battery

Although not shown in the drawings, the electrode assembly 12 may be composed of what is called an all-solid-state battery. In the case of all-solid-state battery, the separator 33 may be replaced with a solid electrolyte layer. Unless specifically stated otherwise, the term "separator" is meant to include a solid electrolyte layer. When the electrode assembly 12 is composed of an all-solid-state battery, the electrode assembly 12 may be provided with a stacked structure in which the positive electrode sheet 31 and the negative electrode sheet 32 are stacked with a solid electrolyte layer, serving as a separator, interposed therebetween. Various structures of the electrode assembly 12 that constitutes an all-solid-state battery have been proposed, which may be employed as appropriate, and the structure of the electrode assembly 12 is not limited to any particular structure.

### Arrangement of Positive Electrode Tabs and Negative Electrode Tabs

As illustrated in Fig. 2, each of the plurality of electrode assemblies 12 housed in the battery case 11 is provided with positive electrode tabs and negative electrode tabs that are disposed on both sides of a straight line L1 defined along a direction perpendicular to the stacking axis of the positive electrode sheet 31 and the negative electrode sheet 32. The positive electrode tabs and the negative electrode tabs are disposed at positions that do not interfere with each other. More specifically, in this embodiment, each of the positive electrode sheet 31 and the negative electrode sheet 32 includes a rectangular region 12a in which the positive electrode sheet 31 and the negative electrode sheet 32 are stacked with the separator 33 interposed therebetween, as illustrated in Fig. 2. The first positive electrode tab 31a1 is disposed at one side edge 12a1 of the rectangular region 12a. The first negative electrode tab 32a1 is disposed at a position of the one side edge 12a1 of the rectangular region 12a that does not interfere with the first positive electrode tab 31a1. The second positive electrode tab 31a2 is disposed at an opposite side edge 12a2 of the rectangular region 12a. The second negative electrode tab 32a2 is disposed at a position of the opposite side edge 12a2 of the rectangular region 12a that does not interfere with the second positive electrode tab 31a2. Accordingly, the plurality of electrode assemblies 12 are arranged in a linear shape along a straight line L1, and the plurality of electrode assemblies 12 are electrically connected in parallel to each other by joining the positive electrode tabs of adjacent electrode assemblies 12 together and joining the negative electrode tabs of the adjacent electrode assemblies 12 together.

More specifically, in this embodiment, the first positive electrode tab 31a1 and the second positive electrode tab 31a2 are disposed at diagonally opposite each other and the first negative electrode tab 32a1 and the second negative electrode tab 32a2 are also disposed diagonally opposite each other in the electrode assembly 12. Specifically, in this embodiment, the first positive electrode tab 31a1 is disposed closer to a first end along the one side edge 12a1 of the rectangular region 12a. The second positive electrode tab 31a2 is disposed closer to a second end that is opposite the first end at which the first positive electrode tab 31a1 is disposed, along the opposite side edge 12a2 of the rectangular region 12a. The first negative electrode tab 32a1 is disposed closer to the second end along the one side edge 12a1 of the rectangular region 12a. The second negative electrode tab 32a2 is disposed closer to the first end along the opposite side edge 12a2 of the rectangular region 12a.

### Joining of Electrode Assemblies 12

Fig. 9 is a perspective view schematically illustrating three electrode assemblies 12 that are joined to each other. In the embodiment shown in Fig. 9, the first positive electrode tab 31a1 and the second positive electrode tab 31a2 are disposed diagonally opposite each other and the first negative electrode tab 32a1 and the second negative electrode tab 32a2 are also disposed diagonally opposite each other in the electrode assembly 12. The three electrode assemblies 12 are arranged in an orderly manner so that their sides provided with the positive electrode tabs and the negative electrode tabs are opposed face-to-face. The middle one of the three electrode assemblies is turned upside down or the other way round horizontally in orientation. Each of the three electrode assemblies 12 includes a positive electrode tab and a negative electrode tab on each opposing side. At the opposing sides thereof, the positive electrode tabs are stacked and joined together, and the negative electrode tabs are stacked and joined together. Thus, the plurality of electrode assemblies 12 may be arranged in alternate orientations. Thereby, the positions of the positive electrode tabs and the positions of the negative electrode tabs are aligned between adjacent ones of the plurality of electrode assemblies 12.

Thus, the first positive electrode tab 31a1 and the second positive electrode tab 31a2 are disposed diagonally opposite each other while the first negative electrode tab 32a1 and the second negative electrode tab 32a2 are disposed diagonally opposite each other in each of the plurality of electrode assemblies 12. Therefore, it is easy to arrange the plurality of electrode assemblies 12 in a row and electrically connect the plurality of electrode assemblies 12 in parallel to each other. In addition, because the first positive electrode tab 31a1 and the second positive electrode tab 31a2 are disposed diagonally opposite each other and the first negative electrode tab 32a1 and the second negative electrode tab 32a2 are disposed diagonally opposite each other in each one of the electrode assemblies 12, the shortest path connecting the first positive electrode tab 31a1 and the second positive electrode tab 31a2 of the positive electrode sheet 31 intersects the shortest path connecting the first negative electrode tab 32a1 and the second negative electrode tab 32a2 of the negative electrode sheet 32 in a plan view viewed in a stacking direction. This reduces uneven reaction between the positive electrode sheet 31 and the negative electrode sheet 32. Accordingly, it is possible to reduce the resistance to the battery reaction between the positive electrode sheet 31 and the negative electrode sheet 32.

The joining of the positive electrode tabs to each other and the negative electrode tabs to each other may be achieved by, for example, solid phase bonding. The use of solid phase bonding may reduce the electrical resistance between the positive electrode tabs and between the negative electrode tabs at the joined portions. For solid phase bonding, it is possible to employ, for example, ultrasonic welding. In ultrasonic welding, the positive electrode tabs, or the negative electrode tabs, are stacked on each other and sandwiched by a horn and an anvil, and the horn is vibrated. Thereby, the stacked positive electrode tabs or the stacked negative electrode tabs are heated and softened without being fused while being kept in a solid phase (solid state), and the stacked positive electrode tabs or the stacked negative electrode tabs are further pressed to undergo plastic deformation, whereby the stacked positive electrode tabs or the stacked negative electrode tabs are joined to each other. Other than ultrasonic welding, various techniques of solid phase bonding may be employed, including cold pressure welding, hot pressure welding, and friction pressure welding. When a joining technique of solid phase bonding is employed, the positive electrode tabs and the negative electrode tabs may be welded together with an electrically lower resistance value. The techniques of joining the positive electrode tabs to each other and joining the negative electrode tabs to each other is not limited to those illustrated herein, and various other techniques may be employed. For example, the joining of the positive electrode tabs to each other and the negative electrode tabs to each other may be effected by welding, unless specifically stated otherwise.

Fig. 10 is a schematic view illustrating a joining process of joining the three electrode assemblies 12. As illustrated in Fig. 10, the three electrode assemblies 12 are joined by stacking positive electrode tabs on each other and stacking negative electrode tabs on each other between two adjacent electrode assemblies 12. In this case, the two adjacent electrode assemblies 12 are provided with a joining part 12b in which adjacent electrode assemblies 12 are joined, which is provided between their stacked regions 12a in which the positive electrode sheet 31 and the negative electrode sheet 32 are stacked. In the joining part 12b in which the electrode assemblies 12 are joined, the positive electrode tabs of the two electrode assemblies 12 are stacked and joined to each other and the negative electrode tabs of the two electrode assemblies 12 are stacked and joined to each other. Because the positive electrode tabs and the negative electrode tabs of the two adjacent electrode assemblies 12 are each provided with an appropriate length, a sufficient space for inserting a device 46 for joining the current collector tabs is provided between the stacked regions 12a of the two adjacent electrode assemblies 12 in which the positive electrode sheet 31 and the negative electrode sheet 32 are stacked. Thus, in the three electrode assemblies 12, the positive electrode tabs are stacked and joined to each other and the negative electrode tabs are also stacked and joined to each other in adjacent ones of the electrode assemblies 12. The device 46 for joining the current collector tabs may be, for example, a horn and an anvil used for performing ultrasonic welding.

In the embodiment shown in Fig. 1, the plurality of electrode assemblies 12 are arranged in a row along the longitudinal axis of the battery case 11 with the stacking axes of the positive electrode sheet 31 and the negative electrode sheet 32 being aligned in a uniform orientation, and are electrically connected in parallel to each other in the battery case 11. Also in this embodiment, as illustrated in Fig. 1, a positive electrode terminal 61 is attached to one of the electrode assemblies 12 that is disposed at one end of the plurality of electrode assemblies 12 arranged in a row, and a negative electrode terminal 62 is attached to another one of the electrode assemblies 12 that is disposed at the other end. As a result, it is possible to apply a voltage across the opposite ends of the plurality of electrode assemblies 12 that are arranged in a row. Thus, it is likely that a voltage is applied uniformly to a plurality of electrode assemblies 12.

### Battery Case 11

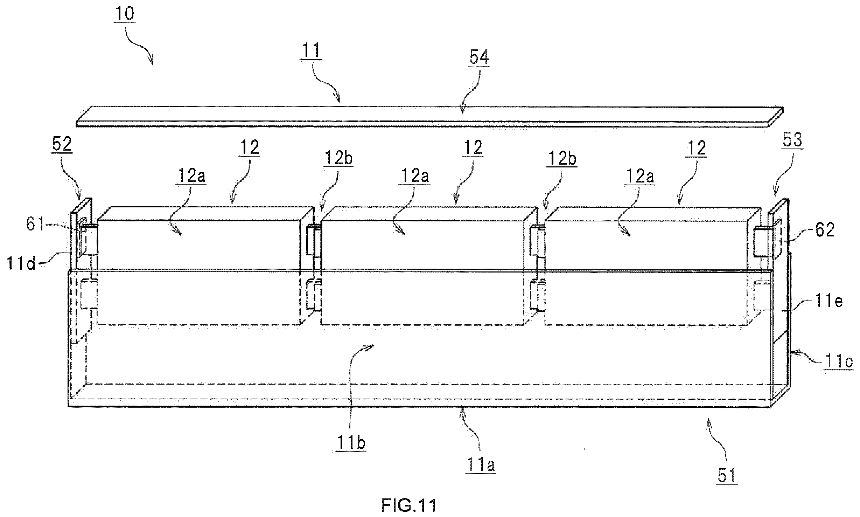

Fig. 11 is a perspective view illustrating a process in which a plurality of electrode assemblies 12 are housed in a battery case 11. As illustrated in Figs. 1 and 11, the battery case 11 includes a substantially rectangular bottom surface portion 11a, a pair of wider surface portions 11b and 11c each extending upwardly from a longer side of the bottom surface portion 11a, and a pair of narrower surface portions 11d and 11e each extending upwardly from a shorter side of the bottom surface portion 11a, and a top surface portion 11f disposed opposite the bottom surface portion 11a. Inside the battery case 11, the shorter sides have a length corresponding to the thickness of each one of the electrode assemblies 12 along the stacking axis of the positive electrode sheet 31 and the negative electrode sheet 32. Inside the battery case 11, the longer sides have a length corresponding to the total length of the plurality of electrode assemblies 12 that are arranged in a row with the stacking axes being parallel to each other. In this embodiment, the longer sides of the battery case 11 have a length corresponding to the total length of the three electrode assemblies 12 that are arranged in a row with the stacking axes being aligned parallel to each other inside the battery case 11, as illustrated in Fig. 1. As a result, the battery case 11 can accommodate the three electrode assemblies 12 that are arranged in a row with the stacking axes being aligned parallel to each other. In this case, the three electrode assemblies 12 can be housed inside the battery case 11 without bending the joining parts 12b of the adjacent electrode assemblies 12 in which the positive electrode tabs are joined to each other and the negative electrode tabs of the adjacent electrode assemblies 12 are joined to each other. As a result, breakage or the like is unlikely to occur in the joining part 12b in which the positive electrode tabs are joined to each other and the negative electrode tabs are joined to each other.

In this embodiment, the battery case 11 includes a frame 51 and plates 52 to 54. Each of the frame 51 and the plates 52 to 54 may be composed of, for example, a metal member composed of aluminum or an aluminum alloy. The frame 51 has such a shape corresponding to the bottom surface portion 11a and the pair of wider surface portions 11b and 11c of the battery case 11. The frame 51 may be formed by, for example, bending a plate-shaped material that are cut out into a predetermined shape. The plate 52 has a shape corresponding to the narrower surface portion 11d. The plate 53 has a shape corresponding to the narrower surface portion 11e. The plate 54 has a shape corresponding to the top surface portion 11f.

The battery case 11 includes shorter sides having a length corresponding to the thickness of the electrode assembly 12, and longer sides having a length corresponding to the total length of the plurality of electrode assemblies 12 that are arranged in a row. It is difficult to form such an oblong battery case 11 by a drawing process. In this embodiment, the battery case 11 is formed by combining the four plate members 51 to 54 and joining the edges of the combined four plate members 51 to 54. In this case, a drawing process is not required. Therefore, this embodiment can employ a large-sized oblong battery case 11. Thus, the battery case 11 may be a prismatic case in which at least two plate members are combined and the edges of the at least two combined plate members are joined to each other. The at least two plate members may have boundaries that are defined in units of surfaces, such as the bottom surface portion 11a, the pair of wider surface portions 11b, 11c, the pair of narrower surface portions 11d, 11e, and the top surface portion 11f. The edges of the combined plate members may be joined to each other. There are no specific limitations on the number of the plate members and how the boundaries are to be defined.

As illustrated in Fig. 11, a positive electrode terminal 61 is attached to the plate 52, which corresponds to the narrower surface portion 11d. A negative electrode terminal 62 is attached to the plate 53, which corresponds to the opposite narrower surface portion 11e. Although not shown in the drawings, the positive electrode terminal 61 and the negative electrode terminal 62 may be attached respectively to the plates 52 and 53 via an insulating member, such as a gasket, so that the positive electrode terminal 61 and the negative electrode terminal 62 can be insulated from the plates 52 and 53 and hermeticity can be ensured. The positive electrode terminal 61 is joined to the positive electrode tab 31a1 of one of the plurality of electrode assemblies 12 that is disposed at one end. The negative electrode terminal 62 is joined to the negative electrode tab 32a2 of another one of the plurality of electrode assemblies 12 that is disposed at the other end. Thus, the plate 52 corresponding to the narrower surface portion 11d is fitted to the positive electrode tab 31a1 of the one of the electrode assemblies 12 that is disposed at the one end. The plate 53 corresponding to the narrower surface portion 11e is fitted to the negative electrode tab 32 of another one of the electrode assemblies 12 that is disposed at the other end.

The plurality of electrode assemblies 12 are housed in the frame 51 in a state in which the plates 52 and 53 are attached to the opposite ends. Although not shown in the drawings, an insulating film may be interposed between the plurality of electrode assemblies 12 and the battery case 11. The plates 52 and 53 are fitted to opposite sides of the frame 51. The plate 54, which corresponds to the top surface portion 11f, is fitted to the opening in the top of the frame 51. The frame 51 and the plates 52 to 54 may be fitted together without space and welded along the edges of the frame 51, for example. Herein, the frame 51 and the plates 52 to 54 may be welded by seam welding. The seam welding may be carried out by, for example, laser welding. In addition, the battery case 11 may be provided with a filling port, a safety vent, and the like, as needed.

Thus, the secondary battery 10 disclosed in the present disclosure includes the battery case 11 and the plurality of electrode assemblies 12 housed in the battery case 11, for example, as illustrated in Fig. 1. As illustrated in Figs. 2 to 5, each of the plurality of electrode assemblies 12 includes a stack structure in which a positive electrode sheet 31 and a negative electrode sheet 32 are stacked with a separator 33 interposed therebetween. The positive electrode sheet 31 includes a positive electrode tab 31a1 and a second positive electrode tab 31a2. The first positive electrode tab 31a1 protrudes from a stacked region 12a in which the positive electrode sheet 31 and the negative electrode sheet 32 are stacked with the separator 33 interposed therebetween. The second positive electrode tab 31a2 protrudes from the stacked region 12a at a position different from where the first positive electrode tab 31a1 protrudes. The negative electrode sheet 32 includes a first negative electrode tab 32a1 and a second negative electrode tab 32a2. The first negative electrode tab 32a1 protrudes from the stacked region 12a at a position different from where the first positive electrode tab 31a1 and the second positive electrode tab 31a2 protrude. The second negative electrode tab 32a2 protrudes from the stacked region 12a at a position different from where the first positive electrode tab 31a1, the second positive electrode tab 31a2, and the first negative electrode tab 32a1 protrude. The plurality of electrode assemblies 12 are arranged in the battery case 11 in a predetermined orderly arrangement. Positive electrode sheets 31 of adjacent two of the electrode assemblies 12 are electrically connected to each other by joining one of the first positive electrode tabs 31a1 and the second positive electrode tabs 31a2 to another one. Negative electrode sheets 32 of the adjacent two of the electrode assemblies 12 are electrically connected to each other by joining one of the first negative electrode tabs 32a1 and the second negative electrode tabs 32a2 being joined to another one.

In such a secondary battery 10 as described above, the plurality of electrode assemblies 12 are housed in the battery case 11. Therefore, it is possible to achieve a higher capacity of the secondary battery 10 by increasing the number of the electrode assemblies 12 that are housed in the battery case 11. Moreover, in adjacent ones of the plurality of electrode assemblies 12 housed in the battery case 11, the positive electrode tabs are electrically connected to each other and the negative electrode tabs are electrically connected to each other. This allows the adjacent ones of the plurality of electrode assemblies 12 to be connected in parallel to each other. The plurality of electrode assemblies 12 housed in the battery case 11 are charged and discharged through the positive electrode terminal 61, which is disposed at one end, and the negative electrode terminal 62, which is disposed at the other end. In this case, because the plurality of electrode assemblies 12 housed in the battery case 11 are connected in parallel to each other, each of the electrode assemblies 12 is brought to the same voltage. In other words, the voltage applied to each of the electrode assemblies 12 inside the battery case 11 is not directly measured. However, the voltage applied to each of the electrode assemblies 12 housed in the battery case 11 is equal to the voltage between the positive electrode terminal 61 and the negative electrode terminal 62, which can be measured from outside the battery case 11 (even if there is a difference in a strict sense, the voltage difference is negligibly small). Therefore, it is possible to obtain the voltage across each of the electrode assemblies 12 within the battery case 11. It is possible to prevent such an event that only one of the plurality of electrode assemblies 12 housed inside the battery case 11 has an abnormally higher voltage than those of the other electrode assemblies 12.

To the knowledge of the present inventors, there is a possibility that a potential difference may arise in the electrolyte solution around the electrode assemblies, for example, when the plurality of electrode assemblies 12 housed in the battery case 11 are connected in series to each other. This may lead to an undesirable event such that a short circuit occurs between the electrode assemblies 12 through the electrolyte solution. For this reason, the present inventors believe that it is necessary to separate the electrolyte solution for each one of the electrode assemblies 12. However, when the plurality of electrode assemblies 12 housed in the battery case 11 are connected in parallel to each other as illustrated in Fig. 1, it is unnecessary to provide partitions for separating the electrolyte solution for each one of the electrode assemblies 12. The present inventors believe that this serves to simplify the structure of the secondary battery 10.

Moreover, in order to obtain a higher capacity for the secondary battery 10, it is necessary to increase the capacity of each electrode assembly 12 that is incorporated therein. When the size of each electrode assembly 12 is increased, the inside of the electrode assembly 12 may not be impregnated sufficiently with the electrolyte solution, for example. In contrast, in the embodiment shown in Fig. 1, a higher capacity of the secondary battery 10 is achieved by increasing the number of the electrode assemblies 12 that are housed in the battery case 11. When this is the case, the size of each one of the electrode assemblies 12 housed in the battery case 11 may not necessarily be large. Therefore, while the electrode assembly 12 may be designed to have a size within a range such that the electrolyte solution can be impregnated easily in the inside and stable performance can be obtained, a higher capacity of the secondary battery 10 is achieved.

In the embodiment shown in Fig. 1, the positive electrode terminal 61 and the negative electrode terminal 62 are mounted on respective plates 52 and 53, which form a pair of narrower side surface portions 11d and 11e. The positive electrode terminal 61 and the negative electrode terminal 62 are not limited to being provided at such positions. For example, the positive electrode terminal 61 and the negative electrode terminal 62 may be provided on a plate 54, which forms the top surface portion 11f.

### Secondary Battery 10A

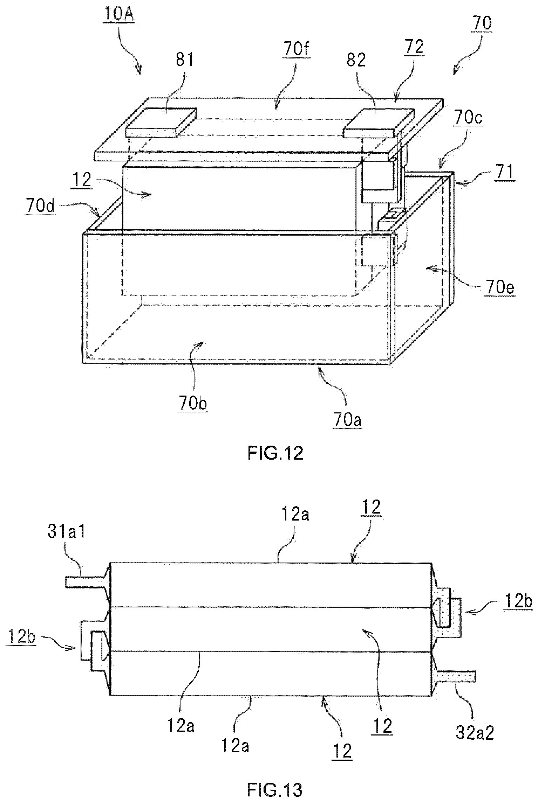

Fig. 12 is a perspective view illustrating a secondary battery 10A according to another embodiment of the disclosure. A battery case 70 of the secondary battery 10A includes a case main body 71 provided with an opening in its top surface and a lid 72 fitted to the opening in the top surface of the case main body 71. Fig. 12 schematically illustrates a state in which the lid 72 is closed when the electrode assembly 12 is housed in the case main body 71. As illustrated in Fig. 12, the secondary battery 10A includes a plurality of electrode assemblies 12 housed in a battery case 70. Fig. 13 is a plan view illustrating the plurality of electrode assemblies 12 housed in the secondary battery 10A shown in Fig. 12. When the plurality of electrode assemblies 12 housed in the battery case 70 are unfolded, the plurality of electrode assemblies 12 are arranged in a row, as illustrated in Fig. 9. Adjacent two of the electrode assemblies 12 are connected at a joining part 12b in which the positive electrode tabs are joined to each other and the negative electrode tabs are joined to each other, so that the adjacent two of the electrode assemblies 12 are electrically connected in parallel to each other (see Fig. 9).

In this embodiment, the two adjacent electrode assemblies 12 are housed in the battery case 70 by being bent and folded at the joining part 12b, so that the stacked regions 12a, in which the positive electrode sheet and the negative electrode sheet are stacked, are stacked on each other. In this case, the aspect ratio of the battery case 70 is made smaller. Moreover, because a plurality of electrode assemblies are housed in the battery case 70, a higher capacity is obtained. Furthermore, the plurality of electrode assemblies 12 housed in the battery case 70 are electrically connected in parallel to each other. For this reason, the voltage applied to each of the electrode assemblies 12 inside the battery case 70 is not directly measured. However, the voltage across each of the electrode assemblies 12 is equal to the voltage between the positive electrode terminal 61 and the negative electrode terminal 62, which can be measured outside the battery case 70. Therefore, it is possible to obtain the voltage across each of the electrode assemblies 12 within the battery case 70. In addition, as illustrated in Fig. 13, the electrode assemblies 12 in the battery case 70 include respective stacked regions 12a in which the positive electrode sheet 31 and the negative electrode sheet 32 are stacked, and the stacked regions 12a are stacked with their stacking axes being aligned in a uniform direction. When a restraining pressure is applied to the stacked regions 12a in which the positive electrode sheet 31 and the negative electrode sheet 32 are stacked, the difference in the restraining pressure between the electrode assemblies 12 is reduced.

The battery case 70 is a prismatic case. The battery case 70 includes a substantially rectangular bottom surface portion 70a, a pair of wider side surface portions 70b and 70c each extending upwardly from a longer side of the bottom surface portion 70a, and a pair of narrower side surface portions 70d and 70e each extending upwardly from a shorter side of the bottom surface portion 70a, and a top surface portion 70f disposed opposite the bottom surface portion 70a. A prismatic case that can accommodate a plurality of electrode assemblies 12 is inevitably large in size, so it is difficult to produce such a prismatic case by a drawing process. In this embodiment, the battery case 70 includes at least two plate members that are joined to each other. The combined plate members may be joined by, for example, fitting the edges together. In this case, a drawing process is not required, and therefore, the size of the battery case 70 can be increased. As a result, it is possible to employ a prismatic case even when the battery case needs to accommodate a large component such that a plurality of electrode assemblies 12 are stacked, as illustrated in Fig. 13.

In this embodiment, the battery case 70 is formed by combining six plate members, which respectively correspond to the substantially rectangular bottom surface portion 70a, the pair of wider side surfaces 70b, 70c, the pair of wider side surfaces 70d, 70e, and the top surface portion 70f, and welding the edges of the combined plate members with no gaps therebetween. For welding, it is possible to employ, for example, laser seam welding. Note that the structure of the battery case 70 is not limited to such an embodiment. The battery case 70 composed of a prismatic case in a substantially rectangular parallelepiped shape may include surfaces respectively corresponding to the substantially rectangular bottom surface portion 70a, the pair of wider side surfaces 70b, 70c, the pair of wider side surfaces 70d, 70e, and the top surface portion 70f. The battery case 70 may include at least two plate members to form the surfaces that respectively correspond to the substantially rectangular bottom surface portion 70a, the pair of wider side surfaces 70b, 70c, the pair of wider side surfaces 70d, 70e, and the top surface portion 70f, the at least two plate members may be combined in a rectangular parallelepiped shape, and the edges of the combined plate members may be joined together. This makes it possible to produce a large-sized prismatic case without use of a deep drawing process. Various techniques may be employed to constitute the surfaces that respectively correspond to the substantially rectangular bottom surface portion 70a, the pair of wider side surfaces 70b, 70c, the pair of wider side surfaces 70d, 70e, and the top surface portion 70f, with use of at least two plate members. The technique of how the battery case 70 may be fabricated is not limited to a particular technique, unless specifically stated otherwise.

In this embodiment, as illustrated in Fig. 9, the electrode assembly 12 includes two positive electrode tabs that are disposed at diagonally opposite locations, and two negative electrode tabs that are disposed at diagonally opposite locations that are different from those at which the two positive electrode tabs are disposed. A positive electrode tab 31a1 provided at one end of the three electrode assemblies 12 and a negative electrode tab 32a2 provided at the other end thereof are disposed closer to the same end with respect to the center line L2 along which the three electrode assemblies 12 are arranged. Thus, in the case where three electrode assemblies 12 each having two positive electrode tabs and two negative electrode tabs that are respectively disposed diagonally opposite each other are connected in parallel, the positive electrode tab 31a1 provided at one end of the three electrode assemblies 12 and a negative electrode tab 32a2 provided at the other end thereof are disposed closer to the same end with respect to the center line L2 along which the three electrode assemblies 12 are arranged. In the case where the joining part 12b at which two adjacent electrode assemblies 12 are joined is bent, the positive electrode tab 31a1 provided at one end of the three electrode assemblies 12 and a negative electrode tab 32a2 provided at the other end thereof are disposed closer to the same end. Then, the two adjacent electrode assemblies 12 are housed in the battery case 11A in a state in which the stacked regions thereof, in which the positive electrode sheet and the negative electrode sheet are stacked, are stacked on each other.

In this embodiment, the positive electrode tab 31a1 at one end of the tree electrode assemblies 12 and the negative electrode tab 32a2 at the other end may be disposed closer to an end near the top surface portion 70f and housed in the battery case 70. A positive electrode terminal 81 and a negative electrode terminal 82 are attached to a lid 72 that forms the top surface portion 70f. The positive electrode terminal 81 and the negative electrode terminal 82 may be insulated from the lid 72, and also provided with hermeticity, by a gasket or the like. The positive electrode terminal 81 is joined to the positive electrode tab 31a1 of one of the plurality of electrode assemblies 12 that is disposed at one end. The negative electrode terminal 82 is joined to the negative electrode tab 32a2 of another one of the plurality of electrode assemblies 12 that is disposed at the other end.

In this embodiment, the positive electrode terminal 81 is joined to the positive electrode tab 31a1 (see Fig. 13) of one of the plurality of electrode assemblies 12 that is located at one end, and the negative electrode terminal 82 is joined to the negative electrode tab 32a2 (see Fig. 13) of another one of the electrode assemblies 12 that is located at the other end. Thus, the plurality of electrode assemblies 12 inside the battery case 70 can be charged and discharged through the positive electrode terminal 81 and the negative electrode terminal 82. The plurality of electrode assemblies 12 are electrically connected in parallel to each other. This means that the voltage between the positive electrode terminal 81 and the negative electrode terminal 82 is in agreement with the voltage applied to the plurality of electrode assemblies 12. That is, the voltage across each of the electrode assemblies 12 is equal to the voltage between the positive electrode terminal 81 and the negative electrode terminal 82, which can be measured from outside the battery case 70. Therefore, it is possible to obtain the voltage across each of the electrode assemblies 12 within the battery case 70. It should be noted that electrical insulation may be provided as appropriate for the negative electrode tab 32a1 of the electrode assembly 12 located at one end and the positive electrode tab 31a2 of the electrode assembly 12 located at the other end (see Fig. 13) that are not connected to a terminal. In addition, ones of the plurality of electrode assemblies 12 that are connected at both ends may be provided with only an electrode tab connected to a terminal.

Thus, each of the electrode assemblies 12 is provided with two positive electrode tabs disposed at diagonally opposite corners and two negative electrode tabs disposed at diagonally opposite corners that are different from those at which the two positive electrode tabs are disposed, and two adjacent electrode assemblies 12 of an odd number of electrode assemblies 12 are electrically connected in parallel to each other. Although an embodiment in which three electrode assemblies 12 are connected together is described as an example herein, it is also possible that a similar configuration may be employed when an odd number, such as 5 or 7, of electrode assemblies 12 are connected together. In such cases, the positive electrode tab 31a1 of one of the plurality of electrode assemblies 12 at one end and the negative electrode tab 32a2 of another one of the electrode assemblies 12 at the other end are disposed closer to one side surface of the prismatic case. As a result, the positive electrode tab 31al of one of the plurality of electrode assemblies 12, which are connected in parallel, at one end and the negative electrode tab 32a2 of another one of the electrode assemblies 12 at the other end may be connected easily to the positive electrode terminal and the negative electrode terminal that are provided on the one side surface of the prismatic case. In other words, it is possible to simplify the terminal structure of the positive electrode terminal and the negative electrode terminal provided on one side surface of the prismatic case.

In this embodiment, as illustrated in Fig. 12, the positive electrode terminal 81 and the negative electrode terminal 82 are attached to the lid 72, which forms the top surface portion 70f. The location at which the positive electrode terminal 81 and the negative electrode terminal 82 are attached to the battery case 70 is not limited to the lid 72. In addition, the number of the electrode assemblies 12 to be housed in the battery case 70 is not limited to a particular number either.

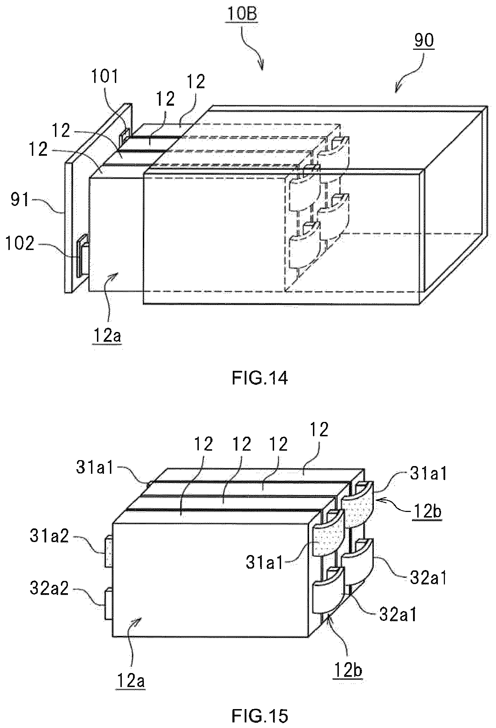

Fig. 14 is a perspective view illustrating a secondary battery 10B according to yet another embodiment of the disclosure. As illustrated in Fig. 14, the secondary battery 10B includes four electrode assemblies 12 housed in a battery case 90. Fig. 14 illustrates a process in which the four electrode assemblies 12 are housed in the battery case 90. Fig. 15 is a perspective view illustrating the electrode assemblies 12 housed in the secondary battery 10B. Each of the electrode assemblies 12 includes two positive electrode tabs disposed at diagonally opposite corners and two negative electrode tabs disposed at diagonally opposite corners that are different from those at which the two positive electrode tabs are disposed. In two adjacent electrode assemblies 12 of the four electrode assemblies 12, the positive electrode tabs are connected to each other and the negative electrode tabs are connected to each other, whereby the two adjacent electrode assemblies 12 are electrically connected in parallel to each other. In the four electrode assemblies 12, the joining part 12b that joins two adjacent electrode assemblies 12 is bent so that the stacked regions 12a, in which the positive electrode sheet and the negative electrode sheet are stacked, of the two adjacent electrode assemblies 12 are stacked on each other. Then, as illustrated in Fig. 15, the two adjacent electrode assemblies 12 are housed in the battery case 90 in a state in which the stacked regions 12a thereof, in which the positive electrode sheet and the negative electrode sheet are stacked, are stacked on each other.

In the four electrode assemblies 12, the joining part 12b that joins two adjacent electrode assemblies 12 is bent so that the stacked regions 12a of the two adjacent electrode assemblies 12, in which the positive electrode sheet and the negative electrode sheet are stacked, are stacked on each other. In this case, the positive electrode tab and the negative electrode tab of the electrode assemblies 12 located at both ends among the four electrode assemblies 12 are disposed on the same side surface, as illustrated in Fig. 15. As illustrated in Fig. 14, the secondary battery 10B includes a positive electrode terminal 101 and a negative electrode terminal 102 that are provided on a plate 91, which forms one of the narrower surface portions of the battery case 90. The positive electrode terminal 101 is joined to the positive electrode tab of one electrode assembly 12 of the electrode assemblies 12 at both ends. The negative electrode terminal 102 is joined to the negative electrode tab of the other electrode assembly 12 of the electrode assemblies 12 at both ends. Thus, even when an even number of electrode assemblies 12 are connected together, the positive electrode terminal 101 and the negative electrode terminal 102 may be provided on one side surface of the battery case 90.

Herein, a prismatic case is shown as an example of the battery case that houses a plurality of electrode assemblies 12. However, the battery case is not limited to such an embodiment. Although not shown in the drawings, the battery case may be, for example, a laminate film battery case that covers the plurality of electrode assemblies 12. The laminate film battery case may be composed of, for example, a laminate film in which a substrate sheet made of aluminum is covered with an insulating resin. Various types of laminate films used for the laminate film battery case have been proposed for use in secondary batteries, and the laminate film is not limited to a particular type.

For example, when a laminate film battery case is used, the shapes of the battery case and the joined part of the laminate film battery case and the electrode assemblies 12 are not strictly fixed. The joined part between the laminate film battery case and the electrode assembly 12 has a certain extent of range of motion. For example, when the electrode assemblies need to be pressed in order to increase the energy density, the joined part between the laminate film battery case and the electrode assemblies 12 may change the location because of the pressing. As a result, it may be possible to alleviate the load acting on the joined part of the electrode assemblies 12, which results from, for example, handling in the manufacturing process, such as work of mounting the battery in a vehicle, as well as acceleration and deceleration, vibrations, and the like that affect the battery when the vehicle is traveling. Moreover, depending on the structure of the electrode assembly, a laminate film battery case may be employed for the battery case when appropriate, such as when a higher pressure needs to be applied to the electrode assembly.

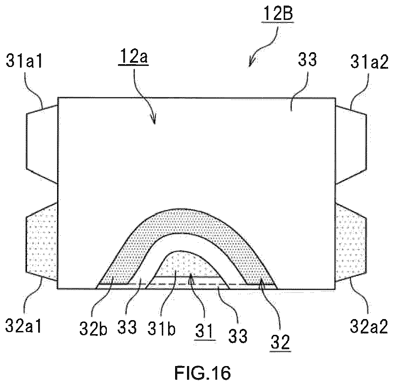

Fig. 16 is a plan view illustrating an electrode assembly 12B according to another embodiment of the disclosure. In this embodiment, the electrode assembly 12B includes a rectangular region 12a in which a positive electrode sheet 31 and a negative electrode sheet 32 are stacked with a separator 33 interposed therebetween. The first positive electrode tab 31a1 is disposed closer to a first end along one side edge 12a1 of the rectangular region 12a. The second positive electrode tab 31a2 is disposed closer to the first end along an opposite side edge 12a2 of the rectangular region 12a. The first negative electrode tab 32a1 is disposed closer to a second end that is opposite the first end at which the first positive electrode tab 31a1 is disposed, along the one side edge 12a1 of the rectangular region 12a. The second negative electrode tab 32a2 is disposed closer to the second end along the opposite side edge 12a2 of the rectangular region 12a. In other words, in the electrode assembly 12B, the first positive electrode tab 31a1 and the second positive electrode tab 31a2 are disposed closer to the same end at the respective side edges 12a1 and 12a2 of the rectangular region 12a. The first negative electrode tab 32a1 and the second negative electrode tab 32a2 are disposed closer to an end that is different from those at which the first positive electrode tab 31al and the second positive electrode tab 31a2 are disposed, at the respective side edges 12a1 and 12a2 of the rectangular region 12a.

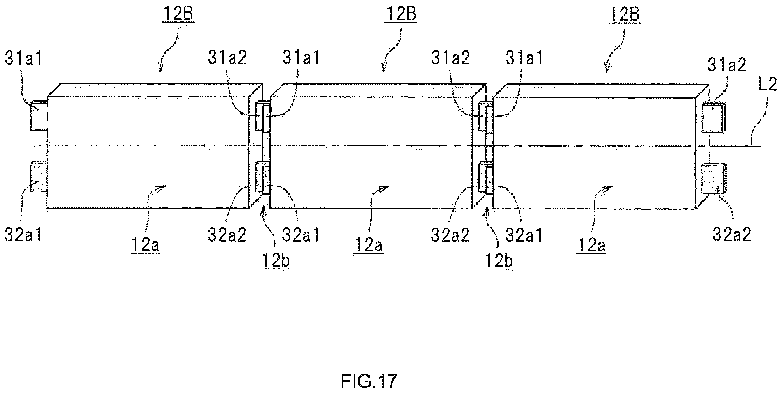

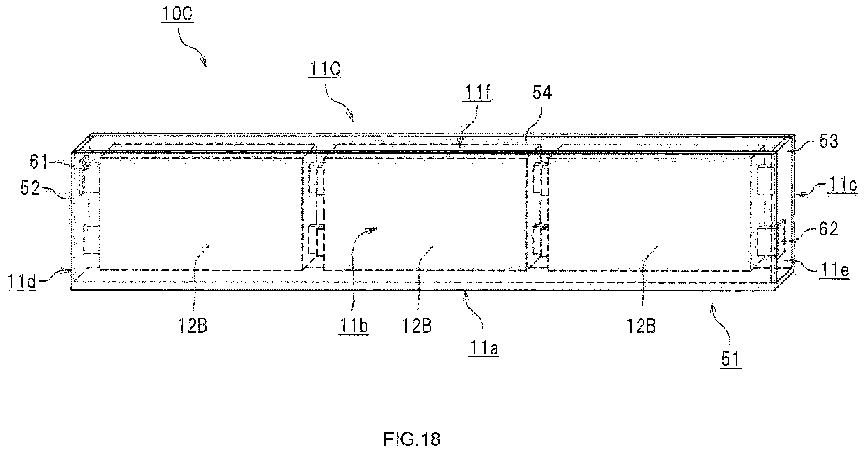

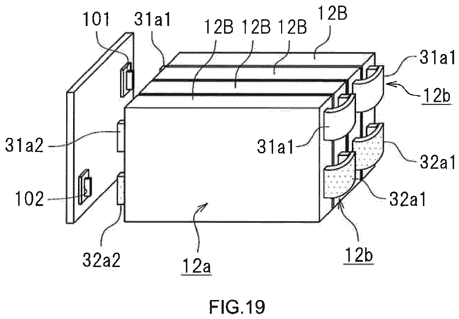

Fig. 17 is a perspective view illustrating a plurality of electrode assemblies 12B that are connected to each other. Fig. 18 is a perspective view illustrating a secondary battery 10C in which the plurality of electrode assemblies 12B are housed in a battery case 11C. Fig. 19 is a perspective view illustrating another embodiment of the plurality of electrode assemblies 12B. Fig. 19 shows a state in which a joining part 12b that joins electrode assemblies 12B is bent so that stacked regions 12a, in which the positive electrode sheet and the negative electrode sheet are stacked, of two adjacent electrode assemblies 12B are stacked on each other.

As illustrated in Figs. 17 and 18, the plurality of electrode assemblies 12B are arranged in a row with the stacking axes of the positive electrode sheet 31 and the negative electrode sheet 32 being aligned in a uniform orientation, in the battery case 11. In the plurality of electrode assemblies 12B, the positive electrode tabs are joined to each other and the negative electrode tabs are joined to each other in adjacent ones of the electrode assemblies 12B, so that the plurality of electrode assemblies 12B are electrically connected in parallel to each other. The plurality of electrode assemblies 12B are arranged in a row along a longitudinal axis of the battery case 11C. In such electrode assemblies 12B, the joining portions that join the positive electrode tabs of adjacent electrode assemblies 12B are arranged linearly, and the joining portions that join the negative electrode tabs of adjacent electrode assemblies 12B are also arranged linearly. As illustrated in Fig. 18, the positive electrode terminal 61 and the negative electrode terminal 62 are provided on narrower surface portions 11d and 11e, respectively. Alternatively, as illustrated in Fig. 19, the plurality of electrode assemblies 12 may be housed in the battery case in such a manner that a joining part 12b that joins two adjacent electrode assemblies 12B is bent so that stacked regions 12a, in which the positive electrode sheet and the negative electrode sheet are stacked, of the two adjacent electrode assemblies 12B are stacked on each other.

Thus, various modifications are possible in various respects, such as the number and arrangement of the electrode assemblies housed in the battery case, the positions of the terminals provided on the battery case, and so forth.

Various embodiments of the secondary battery have been described hereinabove according the present disclosure. Unless specifically stated otherwise, the embodiments of the secondary battery described herein do not limit the scope of the present invention. It should be noted that various other modifications and alterations may be possible in the embodiments of the battery disclosed herein. In addition, the features, structures, or steps described herein may be omitted as appropriate, or may be combined in any suitable combinations, unless specifically stated otherwise.

## Claims

1. A secondary battery (10) comprising:
a battery case (11); and
a plurality of electrode assemblies (12) housed in the battery case (11), wherein:
each of the plurality of electrode assemblies includes a stack structure in which a positive electrode sheet (31) and a negative electrode sheet (32) are stacked with a separator (33) interposed therebetween;
the positive electrode sheet (31) includes:
a first positive electrode tab (31a1) protruding from a stacked region in which the positive electrode sheet (31) and the negative electrode sheet (32) are stacked with the separator (33) interposed therebetween, and
a second positive electrode tab (31a2) protruding from the stacked region (12a) at a position different from where the first positive electrode tab protrudes;
the negative electrode sheet (32) includes:
a first negative electrode tab (32a1) protruding from the stacked region (12a) at a position different from where the first positive electrode tab (31a1) and the second positive electrode tab (31a2) protrude; and
a second negative electrode tab (32a2) protruding from the stacked region (12a) at a position different from where the first positive electrode tab (31al), the second positive electrode tab (31a2), and the first negative electrode tab (32a1) protrude; and
the plurality of electrode assemblies (12) are arranged in the battery case (11) in a predetermined orderly arrangement;
positive electrode sheets (31) of adjacent two of the electrode assemblies are electrically connected to each other by joining one of the first and second positive electrode tabs (31a1, 31a2) of the adjacent two of the electrode assemblies to another one; and
negative electrode sheets (32) of the adjacent two of the electrode assemblies are electrically connected to each other by joining one of the first and the second negative electrode tabs (32a1,32a2) of the adjacent two of the electrode assemblies to another one.

2. The secondary battery (10) according to claim 1, wherein:
each of the positive electrode sheet (31) and the negative electrode sheet (32) includes a rectangular region (12a) in which the positive electrode sheet (31) and the negative electrode sheet (32) are stacked with the separator (33) interposed therebetween;
the first positive electrode tab (31a1) is disposed at one side edge of the rectangular region;
the first negative electrode tab (32a1) is disposed at a position of the one side edge of the rectangular region that does not interfere with the first positive electrode tab(31a1);
the second positive electrode tab (31a2) is disposed at an opposite side edge of the rectangular region; and
the second negative electrode tab (32a1) is disposed at a position of the opposite side edge of the rectangular region that does not interfere with the second positive electrode tab(31a2).

3. The secondary battery (10) according to claim 2, wherein:
the first positive electrode tab (31a1) is disposed closer to a first end along the one side edge of the rectangular region;
the second positive electrode tab (31a2) is disposed closer to a second end that is opposite the first end at which the first positive electrode tab is disposed, along the opposite side edge of the rectangular region;
the first negative electrode tab (32a1) is disposed closer to the second end along the one side edge of the rectangular region; and
the second negative electrode tab (32a2) is disposed closer to the first end along the opposite side edge of the rectangular region.

4. The secondary battery (10) according to claim 3, wherein the plurality of electrode assemblies (12) are arranged in alternate orientations.

5. The secondary battery (10) according to claim 2, wherein:
the first positive electrode tab (31a1) is disposed closer to a first end along the one side edge of the rectangular region (12a);
the second positive electrode tab (31a2) is disposed closer to the first end along the opposite side edge of the rectangular region (12a);
the first negative electrode tab (32a1) is disposed closer to a second end that is opposite the first end at which the first positive electrode tab (31a1) is disposed, along the one side edge of the rectangular region (12a); and
the second negative electrode tab (32a2) is disposed closer to the second end along the opposite side edge of the rectangular region (12a).

6. The secondary battery (10) according to any one of claims 1 to 5, wherein each of the plurality of electrode assemblies (12) comprises positive electrode sheets (31) and negative electrode sheets (32) each being formed in a predetermined shape, the positive electrode sheets (31) and negative electrode sheets (32) being alternately stacked with separators (33) each interposed between one of the positive electrode sheets (31) and one of the negative electrode sheets (32).

7. The secondary battery (10) according to any one of claims 1 to 5, wherein each of the plurality of electrode assemblies comprises (12) a wound electrode assembly (12B) including a strip-shaped positive electrode sheet (31) and a strip-shaped negative electrode sheet (32) being stacked with their longitudinal axes being aligned in a uniform orientation and being wound around a winding axis extending in a lateral axis.

8. The secondary battery (10) according to any one of claims 1 to 7, wherein the plurality of electrode assemblies (12) are arranged in a row along a longitudinal axis of the battery case (11) with respective stacking axes of the positive electrode sheet (31) and the negative electrode sheet (32) being aligned in a uniform orientation, and are electrically connected in parallel to each other in the battery case (11).

9. The secondary battery (10) according to claim 8, further comprising a positive electrode terminal (61) attached to one of the electrode assemblies (12) that is located at one end of the plurality of electrode assemblies (12) arranged in a row, and a negative electrode terminal (62) attached to another one of the electrode assemblies that is located at the other end.

10. The secondary battery (10) according to claim 9, wherein:
the battery case (11) includes:
a substantially rectangular bottom surface portion (11a);
a pair of wider surface portions (11b,11c) extending upwardly from respective longer sides of the bottom surface portion (11a);
a pair of narrower surface portions (11d,11e) extending upwardly from respective shorter sides of the bottom surface portion (11a); and
a top surface portion (11f) disposed opposite the bottom surface portion (11a), wherein:
each of the shorter sides has a length corresponding a thickness of the electrode assembly (12) along a stacking axis of the positive electrode sheet (31) and the negative electrode sheet (32); and
each of the longer sides has a length corresponding to a total length of the plurality of electrode assemblies that are arranged in a row with the stacking axes being parallel to each other.

11. The secondary battery (10) according to claim 10, wherein the battery case (11) is a prismatic case in which at least two plate members are joined to each other.

12. The secondary battery (10) according to any one of claims 1 to 7, wherein: adjacent two of the plurality of electrode assemblies (12) are electrically connected in parallel to each other; and the adjacent two of the plurality of electrode assemblies (12) include a joining part joining the adjacent two of electrode assemblies and being bent so that the stacked regions of the two adjacent electrode assemblies are stacked on each other in the battery case (11).

13. The secondary battery (10) according to claim 12, wherein the battery case (11) is a prismatic case in which at least two plate members are joined to each other.

14. The secondary battery (10) according to any one of claims 1 to 9 and 12, wherein the battery case is a laminate film case covering the plurality of electrode assemblies.
